# EUROPEAN PATENT APPLICATION

(11) **EP 1 600 939 A1**
(43) Date of publication of application: **30.11.2005**
(21) Application number: 03816156.8
(22) Date of filing: 04.03.2003
(51) Int. Cl.: G09G 5/22, G09G 5/10, G09G 5/36, G06F 3/00, G06F 15/02

(54) **IMAGE DISPLAY METHOD, IMAGE DISPLAY PROGRAM, AND INFORMATION DEVICE**

(71) Applicant: FUJITSU LIMITED, Kawasaki-shi, Kanagawa 211-8588 (JP)
(72) Inventor: NAKANO, Yutaka c/o FUJITSU PERSONAL COMPUTER, Inagi-shi, Tokyo 206-0801 (JP)
(74) Representative: Körfer, Thomas
(86) International application number: PCT/JP2003/002497
(87) International publication number: WO 2004/079708

(57) **Abstract**

An extraction image is extracted from the image displayed on a display screen. The position of a highlighted portion of the extracted image of the image is determined. The extracted image is enlargedly displayed in the position of the highlighted portion so that the area where the extracted image is present may be transparent with respect to the image and enlarged.

## Description

### TECHNICAL FIELD

The present invention relates to an image display technology for an image processing terminal.

### BACKGROUND ART

Currently, PDA (Personal Digital Assistants) or various portable information terminals such as a cellular phone are being in widespread use.

The PDA is a personal information management terminal also called a portable information terminal. In general, the PDA has a function of managing an address book or schedule, a function of editing character information such as a text file, a function of sending/receiving an e-mail, or the like.

In addition, the PDA is equipped with a liquid crystal display for displaying such information. In the PDA, a pressure-sensitive sensor is provided over the entire surface of a display portion of the display. This kind of display (or pressure-sensitive sensor) is generally called a touch panel.

The PDA is operated using a pen-shaped member called a stylus pen, not a keyboard used for a computer. The PDA is operated by tapping the touch panel with the stylus pen. A so-called tapping operation such as laying down a trail on the display with the stylus pen or pointing at a given portion for instruction is comparable to a computer operation with a mouse.

In general, a compact terminal main body is applied to various portable information terminals such as a PDA and a cellular phone. However, the compact terminal main body leads to a small display screen in the PDA. As a result, the PDA encounters a problem in that a user hardly reads displayed text because of its small character size.

Here, as a technology for improving a visibility for a display image as character information in the aforementioned information processing terminal such as a computer, for example, a technology of enlarging a display image as character information is disclosed (e.g., Patent Documents 1 to 4).
Patent Document 1
   JP 2002-229703 A
Patent Document 2
   JP 2000-99506 A
Patent Document 3
   JP 10-91382 A
Patent Document 4
   JP 2001-306203 A

### DISCLOSURE OF THE INVENTION

However, in applying the technologies disclosed in the above patent documents to the portable information terminal such as PDA, for example, the following problems arise.

First, with the technologies disclosed in Patent Documents 1 to 3 , an enlarged portion of a displayed character image extends over a not-enlarged portion of the displayed character image to thereby hide the portion from sight. Accordingly, in the case of applying the technologies disclosed in Patent Documents 1 to 3 to the PDA, the enlarged character image becomes easy to view, while the original text not enlarged is hard to view on account of its limited display screen area.

In addition, the technology disclosed in Patent Document 4 superimposes and displays a window displaying an enlarged character on the original character string. Accordingly, with the technologies disclosed in the above patent documents, the original character string is hidden from sight by the enlarged character string. For this reason, those technologies cannot be suitably applied to the PDAwhose display screen area is limited.

The present invention has been made in light of the above-mentioned circumstances, and therefore it is an object of the present invention to provide an image display technology with which a highlighted character image and an original character image not highlighted can be referenced on a display screen of an information terminal.

To solve the above-mentioned problem, the present invention adopts the following means. That is, in the present invention, an extracted image whose display form is to be changed is extracted from an image on a display screen of an information device. Then, in the present invention, a highlight position of the extracted character image on the document image is determined. Then, in the present invention, the extracted image is displayed in the highlight position on the display screen such that an area where the extracted image exists turns see-through relative to the image and the extracted image is enlarged.

According to the present invention, in the image processing process, a specific image is displayed while superimposed on the original image, whereby the user can easily view the image.

Also, in the present invention, the image may be a character image.

Further, in the present invention, a portion in an area outside a character portion in the extracted character image may be displayed in a see-through form relative to the document image.

Accordingly, according to the present invention, both the highlighted character image and the original document image can be seen even with a display screen of a limited screen area.

Also, in the present invention, display attributes may be changed such that the extracted character image is highlighted relative to the document image on the display screen.

Accordingly, according to the present invention, in the case of displaying the highlighted character image in the form of being superimposed on the original document image, the highlighted character image can be seen with ease.

Then, in the present invention, an extract range of an image may be specified as the extracted character image from the document image..

Also, in the present invention, the extracted character image may be displayed in an enlarged form relative to the character image of the document image.

Accordingly, according to the present invention, the character image to be highlighted can be easily seen relative to the original character image.

Then, in the present invention, a display color, a gray scale of the display color, and a font of at least one of the extracted character image and the display screen may be determined such that the extracted character image is highlighted.

Accordingly, according to the present invention, even in the case of displaying the character image to be highlighted in the form of being superimposed on the original document image, the character image can be seen with ease.

Further, in the present invention, a predetermined range of a character image in the document image may be specified as the extract range.

Accordingly, according to the present invention, it is possible to specify an extract range of the character image to be highlighted with ease and accuracy..

Further, the present invention may provide a program for executing any of the above functions. Besides, according to the present invention, the above program may be recorded on a computer-readable storage medium.

Furthermore, the present invention may provide an apparatus capable of executing any of the above functions.

### BRIEF DESCRIPTION OF THE DRAWINGS

FIG. 1 is a schematic diagram showing hardware of personal digital assistants (PDA) according to an embodiment of the present invention;
FIG. 2 shows a system configuration of the hardware of the PDA according to the embodiment of the present invention;
FIG. 3 is a flowchart illustrative of a highlighting process flow according to the embodiment of the present invention;
FIG. 4 is a flowchart illustrative of a character image enlarging process according to the embodiment of the present invention;
FIG. 5 shows an example of a display screen displaying an ordinary document image according to the embodiment of the present invention;
FIG. 6 shows an example of a display screen displaying a document image that is created by enlarging and highlighting an extracted character image according to the embodiment of the present invention;
FIG. 7 shows an example of an option screen for setting how a character image is highlighted according to the embodiment of the present invention;
FIG. 8 shows an example of a font selection screen for selecting a font of a character image to be highlighted according to the embodiment of the present invention; and
FIG. 9 shows an example of a color selection screen for selecting a display color of a character image to be highlighted according to the embodiment of the present invention.

### BEST MODE FOR CARRYING OUT THE INVENTION

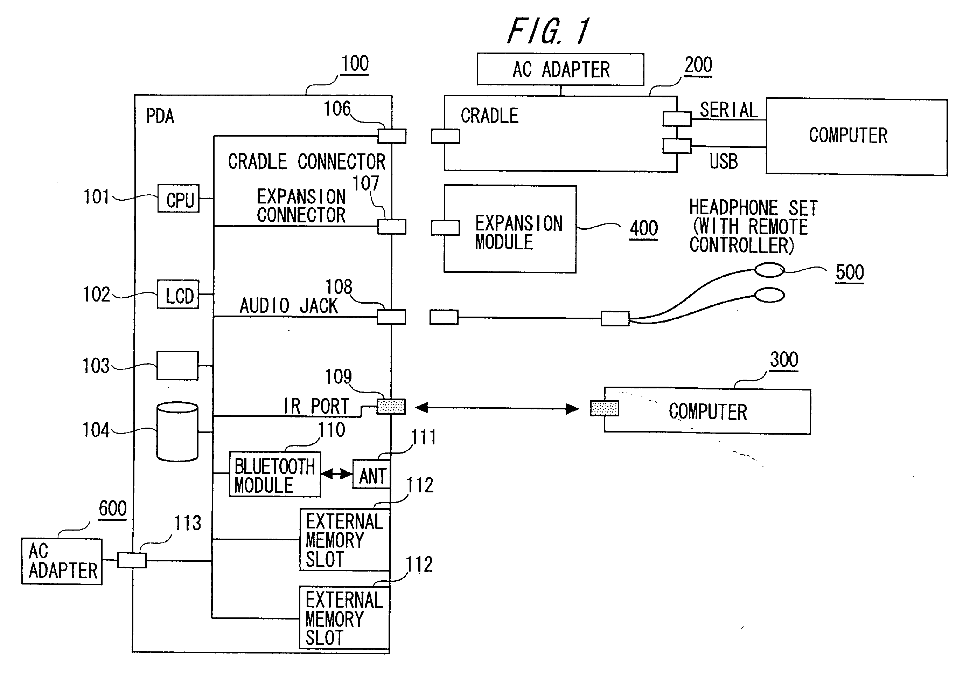

Hereinafter, an image display method according to an embodiment of the present invention will be described with reference to FIGS. 1 to 9.

Note that in this embodiment, the image display method of the present invention will be explained taking as an example a case of highlighting a character image with a document editing application program of a portable information terminal (in the following description, referred to as PDA (Personal Digital Assistants)). Besides, in this embodiment, the image display method of the present invention is provided in the form of being installed into a program executable on an information processor such as a computer. The image display program causes a computer to execute image display processing with the document editing application program and other such existing application programs, as an add-in (function addition) program.

### <Apparatus structure>

FIG. 1 is a schematic diagram showing PDA hardware for executing processing of this embodiment. A PDA 100 includes a CPU (central processing unit) 101 for performing various arithmetic operations. The PDA 100 further includes a liquid crystal display unit 102 for displaying processing contents etc. The PDA 100 further includes various input means 103 such as a touch panel and an input key as well as various storage media 104 such as a flash memory and SDRAM (Synchronous Dynamic Random Access Memory). In addition, the respective components are connected to one another via a bus 105.

Further, the PDA 100 is provided with various interfaces for establishing connections with an external device. In this embodiment, provided as the interfaces of the PDA 100 are a cradle connector 106, an expansion connector 107, an audio jack 108, an IR (infrared ray) port 109, a bluetooth module 110, an external memory slot 112, and an AC (alternating current power) adaptor jack 113.

Next, the interfaces will be described. The cradle connector 106 is connected to a computer 300 by way of the cradle 200. The expansion connector 107 is used for connections with various expansion modules 400. The audio jack 108 is used for connections with an external audio device such as a headphone 500. The IR port 109 forms a communication path to the computer 300 by infrared ray. The bluetooth module 110 is linked with the computer 300 compliant with bluetooth by radio through an antenna 111. The external memory slot 112 is a connection slot compliant with specifications of various compact flash memories.

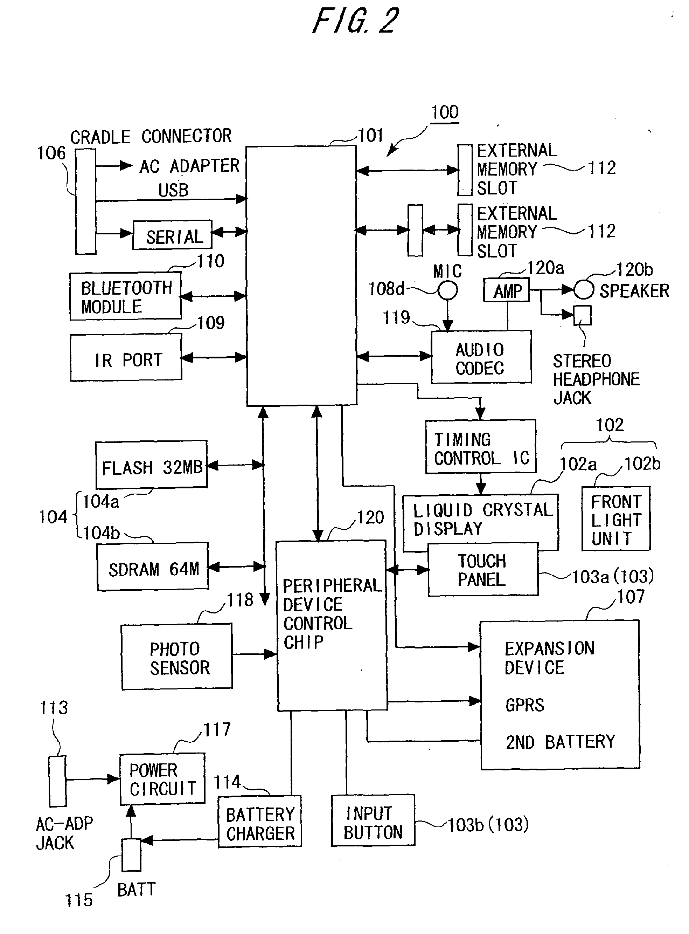

FIG. 2 shows a hardware system configuration of the PDA 100 according to this embodiment. As described above, the PDA 100 includes the CPU 101, the liquid crystal display unit 102 (display means of the present invention), the input means 103, the storage medium 104, the cradle connector 106, the expansion connector 107, the audio jack 108, the IR port 109, the bluetooth module 110, the external memory slot 112, and the AC adaptor jack 113. Also, the PDA 100 includes a battery charger 114, a battery 115, a power circuit 117, a photosensor 118, an audio CODEC (coder-decoder) 119, and a peripheral device control chip 120.

Hereinafter, FIG. 2 will be referenced to explain components of the PDA 100 except for those shown in FIG. 1. The liquid crystal display unit 102 includes a liquid crystal display 102a and a front light unit 102b. A display screen of the liquid crystal display 102a is provided with a touch panel 103a receiving an instruction from the screen to the PDA 100.

In the PDA 100, provided as the input means 103 are the touch panel 103a and an input button 103b. The PDA 100 includes a flash memory 104a and an SDRAM 104b as the storage medium 104. The cradle connector 106 is connected with an AC power line, a USB connection cable, a serial connection cable, etc. The cradle connector 106 establishes connections with a power supply and other device.

Besides, the audio jack 108 is connected to the audio CODEC 119 via the amplifier 120. The audio CODEC 119 converts a digital signal indicative of audio data from the CPU 101 into an analog signal. The analog signal is output in a sound form from the audio jack 108 and a speaker 120b via the amplifier 120.

The power circuit 117 of the PDA 100 is connected to the battery 115, the battery charger 114, and the AC adaptor jack 113. The power circuit 117 controls the power supply from the AC adapter jack 113 and the cradle connector 106 to the battery 115 and components of the PDA 100.

The peripheral device control chip 120 is adapted to control expansion devices etc. to be connected to the expansion connector 107. The peripheral device control chip 120 is connected to the expansion device and the CPU 101.

### <Highlighting process>

Next, a highlighting process for a character image according to this embodiment will be described.

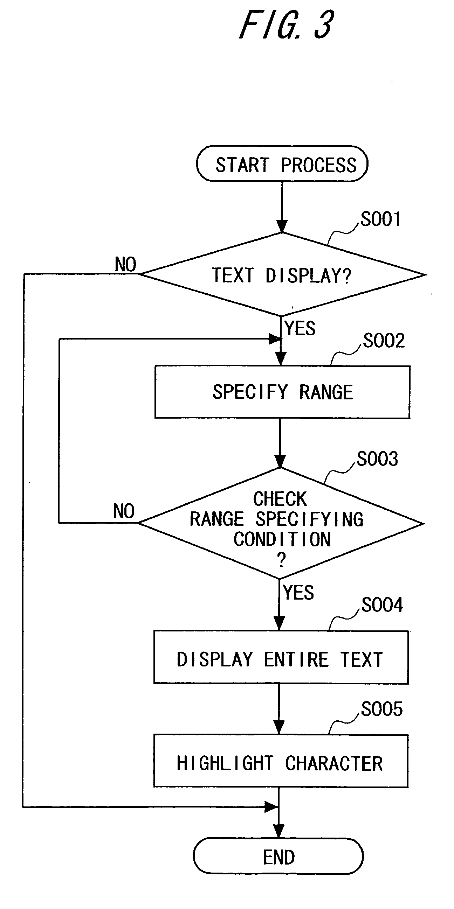

FIG. 3 is a flowchart illustrative of the highlighting process for the character image according to this embodiment.

First, the CPU 101 (range specifying means of the present invention) judges whether or not there is any text (document image) as a character image to be highlighted (step 001 in FIG. 3, hereinafter abbreviated to S001). In step 001, if it is judged that there is no text, the PDA 100 ends this process.

In step 001, if it is judged that there is any text as a character image to be highlighted, the PDA 100 receives information that specifies a range of the character image to be highlighted, the information being input by a user through the input means 103 (range specifying means of the present invention) such as the touch panel 103a (S002). The process carried out in step 002 corresponds to a range specifying step the present invention. In the process of step 002, as a method of specifying a range of a character image to be highlighted in response to a request from a user, for example a stylus pen may be used to tap the touch panel 103a for specifying a range of the character image in a full-matched form to extract the image. As another method of specifying a range of a character image, for example, the input button 103b may be used to specify the range of the character image in a full-matched form to extract the image. As still another method of specifying a range of a character image, for example, the range of the character image may be specified by specifying a given character image in a predetermined range, for example, one clause, a range between punctuation marks, or up to the end of a line to extract the image. At this time, it is possible to determine the predetermined range inclusive of an image around the character image designated by the user, for instance.

Then, the CPU 101 determines whether or not the character image in the specified range can be displayed on the liquid crystal display unit 102 of the PDA 100 (S003). If the character image in such a range can not be displayed on the liquid crystal display unit 102, the CPU 101 executes the process of step 002 again for specifying a range of the character image.

Also, the CPU 101 changes display attributes of a document image and displays the image on the liquid crystal display unit 102 (S004). In this case, for example, the CPU 101 effects a process for changing display attributes by changing gray scales of a display color of the document image (e.g., setting the gray scale lower than ordinary display). Besides, as the process for changing the display attributes, for example, a process for changing the display color or font may be carried out.

Further, the CPU 101 displays the character image in the specified range on the liquid crystal display unit 102 (S005). At this time, a process for determining display attributes such as a display color of the character image, the gray scale of the display color, the font, and the character size is done.

Then, the character image is displayed while superimposed on a document image whose display attributes are changed in step 004. Further, the document image, which is displayed below the character image, can be seen through it. Accordingly, in this embodiment, even with an information terminal small in display screen such as PDA, the character image can be highlighted while the original document image can be seen.

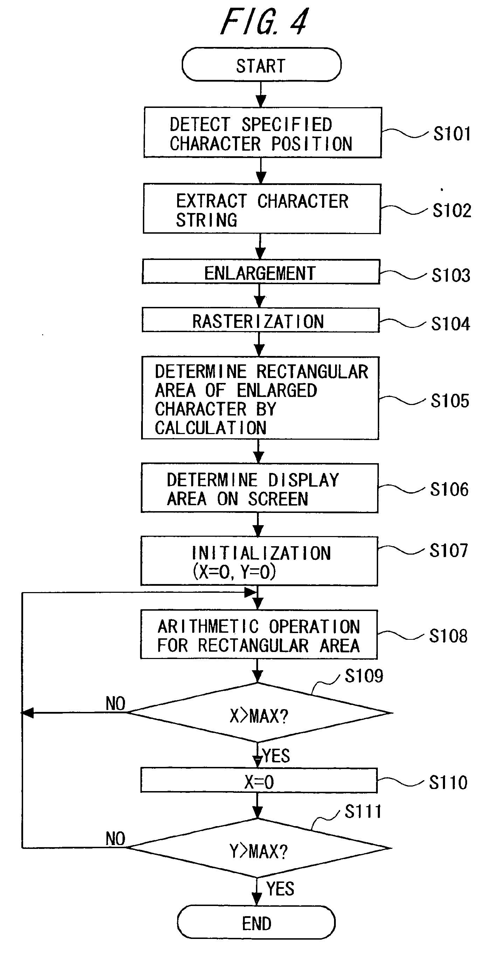

FIG. 4 is a flowchart of a character image enlarging process for enlarging the character image as an example of the process for highlighting the extracted character image.

First, the CPU 101 detects coordinates of the character image on a screen from the character image range specified by the user (step 101 in FIG. 4, hereinafter abbreviated to S101). Here, the coordinates to be detected are X coordinates and Y coordinates of a starting point and a terminal point of the character image range on the screen, for example. After detecting the coordinates of the character image, the CPU 101 extracts information on the character image (S102). Then, the CPU 101 changes information regarding the character size out of the information on the character image so as to enlarge the character size (S103). After that, the CPU 101 sends information about the enlarged character image to an image processor (display means and display attribute changing means of the present invention) which is omitted from the figure and used for controlling a display screen.

The image processor rasterizes the character image so as to enlarge the same on the display screen based on the information about the enlarged character image (S104). The image processor determines a rectangular area of the character image on the screen by calculation based on relative position coordinates of the enlarged character image in the display range (S105). The image processor determines absolute coordinates of the character image in the display area on the display screen based on relative coordinates of the character image in the rectangular area thus determined (S106). The image processor initializes the variable indicative of the position in the character image to (0,0) (S107). That is, in an initial state, the variable (X, Y) is set to the origin of the relative coordinate system.

The image processor performs an arithmetic operation for the rectangular area of the character image in the display area thereof (S108). In the arithmetic operation for the rectangular area, the following processes are carried out. The image processor executes a process for inverting bits in a given portion (for example, inter-image OR operation) if the given portion corresponds to a character portion either of the character image in the display area or of a document image in the display area. In contrast, the image processor keeps a background color of the display screen without inverting bits in a given portion if the given portion corresponds to portions other than characters of the character image in the display area and portions other than characters of the document image in the display area.

The image processor judges whether or not the process in step 108 is completed up to a position where the X coordinate of the rectangular area takes the maximum value (S109). If the arithmetic operation for the rectangular area in an X direction has not been completed, the image processor returns the process to step 108. Then, the image processor sets a value of the X coordinate to 0 upon the completion of the arithmetic operation for the rectangular area in the X direction (S110). Further, the image processor judges whether or not the arithmetic operation for the rectangular area in a Y direction is completed (S111). At this time, if the arithmetic operation for the rectangular area in the Y direction has not been completed, the image processor returns the process to step 108.

After the completion of the arithmetic operation for the rectangular area in the X and Y directions, the image processor ends this process.

### <Display screen example displaying highlighted image>

Next, a display screen example displaying a highlighted image according to this embodiment will be explained.

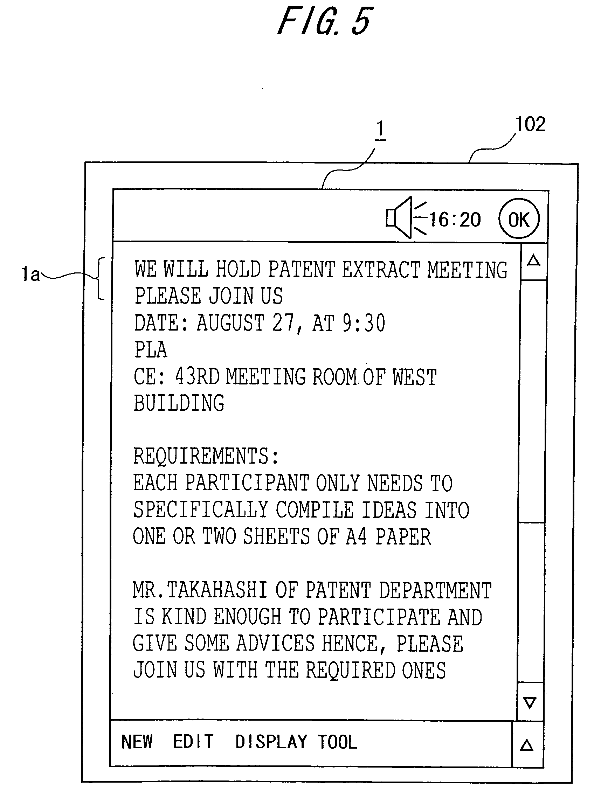

FIG. 5 shows an example of a document image 1 displayed on the liquid crystal display unit 102 of the PDA 100 according to this embodiment. In the document image 1, a range of a character image 1a to be highlighted is specified in the aforementioned way. Then, the above highlighting process (enlarging process) according to this embodiment is carried out.

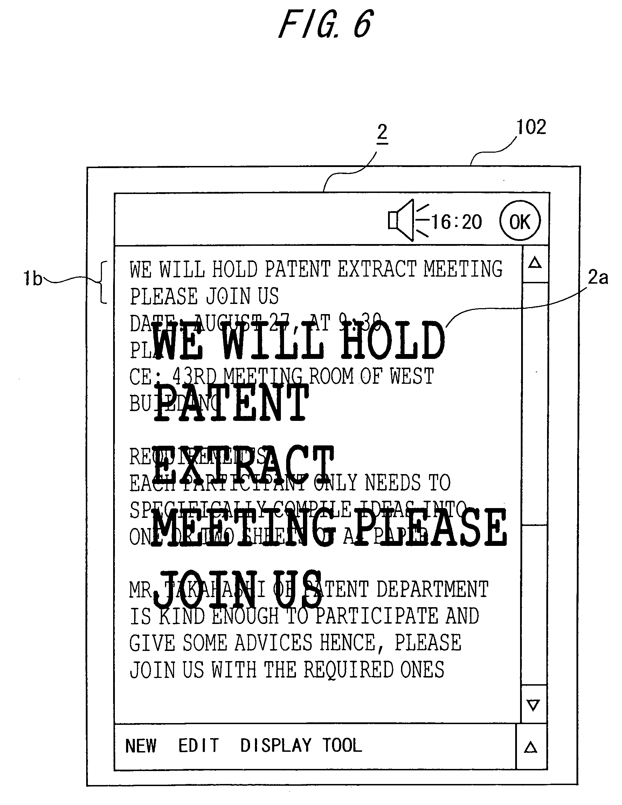

FIG. 6 shows an example of a document image 2 after the highlighting process, which is displayed on the liquid crystal display unit 102 of the PDA 100 according to this embodiment. In the document image 2, a highlighted character image 2a is displayed while superimposed on other character images of the document image 2. Besides, in the document image 2, the character image 1a not highlighted is also displayed. The document image 2 undergoes the display attribute changing process so as to exaggeratedly display the highlighted character image 2a.

The display attributes of the highlighted character image 2a are determined such that the image is exaggeratedly displayed relative to the document image 2 by setting a display color different from that of the document image 2. Also, the document image 2a is displayed with the document image 2 as the background such that the document image 2 can be seen through it. In other words, other area than an area where the character portion in the character image exists turns see-through, with the result that the underlying document image can been seen through it.

In this way, with the highlighting process according to this embodiment, the extracted character image is highlighted and the original document image can be seen.

### <Menu screen for highlighting process>

Next, description will be given of an example of a menu screen (display attribute changingmeans of the present invention) for determining display attributes of a document image and a character image to be highlighted in the highlighting process according to this embodiment.

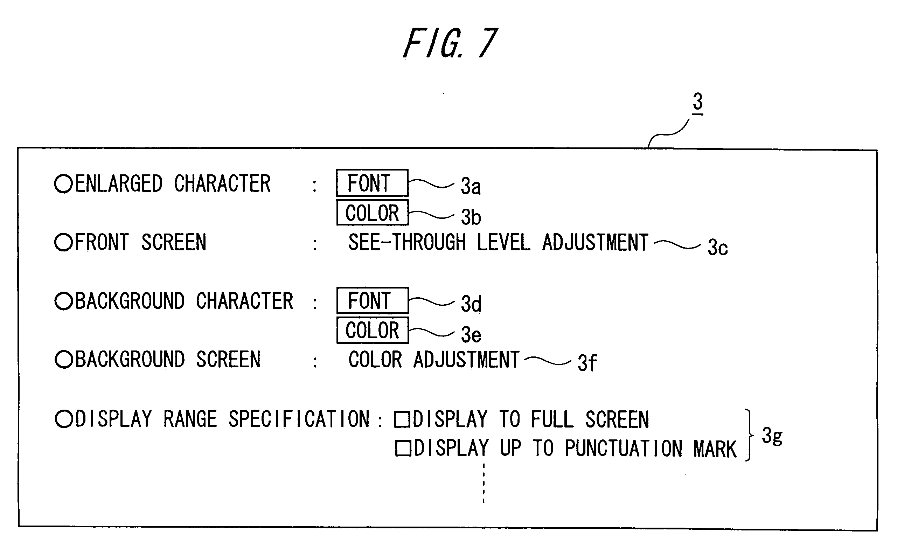

FIG. 7 shows an example of a menu screen 3 for the highlighting process according to this embodiment. The menu screen 3 includes a font selection button 3a and a display color selection button 3b for the character image to be highlighted, a button 3c for adjusting a see-through level of the screen, a font selection button 3d and a display color selection button 3e for the background document image, a selection button 3f for adjusting a background display color, and a selection check box 3g for specifying a range of a display area of a character image to be extracted. In selecting the buttons and the check box on the menu screen 3, the touch panel 103a on the liquid crystal display unit 102 is tapped with the stylus pen (not shown) to indicate the objective one.

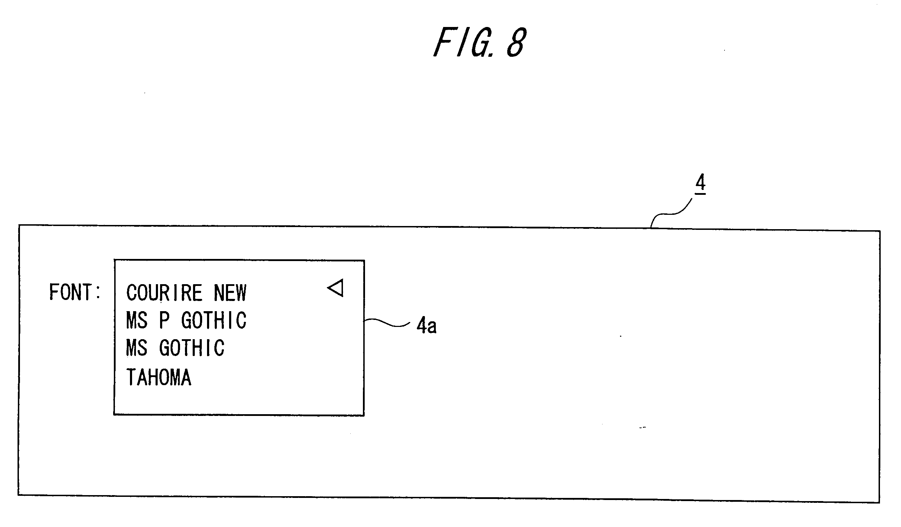

FIG. 8 shows an example of a font selection screen 4 displayed when the font selection buttons 3a and 3d are selected on the menu screen 3. The font selection screen 4 displays a font name selection portion 4a. The user selects a desired one from within the font name selection portion 4a. Thus, the user can select a font of the character image to be highlighted and document image with the font selection buttons 3a and 3d.

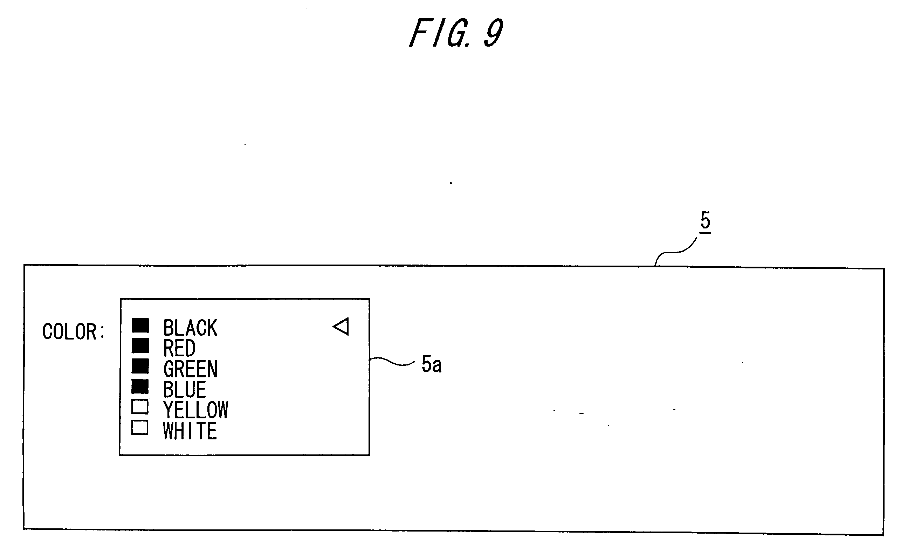

FIG. 9 shows an example of a display color selection screen 5 displayed when the display color selection buttons 3b and 3e are selected on the menu screen 3. The display color selection screen 5 displays a display color selection portion 5a. The user selects a desired one from within the display color selection portion 5a. Thus, the user can select a display color of the character image to be highlighted and the document image with the display color selection portions 3b and 3e.

### <Modified example>

Note that the image display method of the present invention is not exclusively limited to this embodiment, but needless to say, various changes can be made without departing from the gist of the present invention.

For example, the highlighting process (enlarging process) according to this embodiment is carried out by the image processor. In place of the image processor, however, this process may be effected by use of a program run on the CPU 101 of the PDA 100.

Further, the highlighting process (enlarging process) according to this embodiment may be performed by use of other computers instead of the PDA. That is, the present invention is applicable to a wide variety of displays of general information devices.

Further, the highlighting process (enlarging process) according to this embodiment is employed for highlighting the character image on the document image, but is applicable to other existing application programs.

In this embodiment, bits in a given portion on the screen are inverted if the given portion corresponds to either the character image to be highlighted or the original document image, which are superimposed together. In place of this, according to the present invention, additive color mixture may be performed between the character image to be highlighted and the original document image.

For example, assuming that the color of the image in each pixel is specified by 8 bits (equivalent to 256 colors), in this process, a color value (0 to 255) of the character image to be highlighted and a color value (0 to 255) of the original document image are added, and the addition result may be set as a color of the superimposed images.

Thus, the character of the underlying document image can be seen even through a character portion in the highlighted character image. Note that in this case, the highlighted character image itself is difficult to view.

Also, in the description of this embodiment, this process is executed using the add-in program. However, the program for executing this process may be installed in an operating system (OS), an application program, etc.

### INDUSTRIAL APPLICABILITY

The present invention is applicable to industries providing an image display technology, which allows a highlighted character image and an original character image not highlighted to be referenced on a display screen of an information terminal.

## Claims

1. An image display method for highlighting an extracted image on a display screen of an information device, comprising:
a step extracting an image whose display form is to be changed, as an extracted image from an image on the display screen;
a step determining a highlight position of the extracted image on the image; and
a display step displaying the extracted image in the highlight position on the display screen such that an area where the extracted image exists turns see-through relative to the image and the extracted image is enlarged.

2. The image display method according to claim 1, wherein the image comprises a character image.

3. The image display method according to claim 2, wherein the display step includes displaying a portion in an area outside a character portion in the extracted character image in a see-through form relative to the document image.

4. The image display method according to claim 3, further comprising a display attribute changing step changing display attributes such that the extracted character image is highlighted relative to the document image on the display screen.

5. The image display method according to claim 4, wherein the display attribute changing step includes determining a display color, a gray scale of the display color, and a font of at least one of the extracted character image and the display screen such that the extracted character image is highlighted.

6. The image display method according to claim 5, further comprising a range specifying step specifying an extract range of an image as the extracted character image from the document image.

7. The image display method according to claim 6, wherein the range specifying step includes specifying a predetermined range of a character image in the document image as the extract range.

8. An image display program for highlighting an extracted image on a display screen of an information device, comprising:
a step extracting an image whose display form is to be changed, as an extracted image from an image on the display screen;
a step determining a highlight position of the extracted image on the image; and
a display s of displaying the extracted image in the highlight position on the display screen such that an area where the extracted image exists turns see-through relative to the image and the extracted image is enlarged.

9. The image display program according to claim 8, wherein the image comprises a character image.

10. The image display program according to claim 9, wherein the display step includes displaying a portion in an area outside a character portion in the extracted character image in a see-through form relative to the document image.

11. The image display program according to claim 10, further comprising a display attribute changing step changing display attributes such that the extracted character image is highlighted relative to the document image on the display screen.

12. The image display program according to claim 11, wherein the display attribute changing step includes determining a display color, a gray scale of the display color, and a font of at least one of the extracted character image and the display screen such that the extracted character image is highlighted.

13. The image display program according to claim 12, further comprising a range specifying step specifying an extract range of an image as the extracted character image from the document image.

14. The image display program according to claim 13, wherein the range specifying step includes specifying a predetermined range of a character image in the document image as the extract range.

15. An information apparatus for highlighting an extracted image on a display screen, comprising:
means for extracting an image whose display form is to be changed, as an extracted image from an image on the display screen;
means for determining a highlight position of the extracted image on the image; and
display means for displaying the extracted image in the highlight position on the display screen such that an area where the extracted image exists turns see-through relative to the image and the extracted image is enlarged.

16. The information device according to claim 15, wherein the image comprises a character image.

17. The information device according to claim 16, wherein the display means displays a portion in an area outside a character portion in the extracted character image in a see-through form relative to the document image.

18. The information device according to claim 16 or 17, wherein the display means displays the extracted character image in an enlarged form relative to the character image of the document image.

19. The information device method according to claim 18, further comprising display attribute changing means for changing display attributes such that the extracted character image is highlighted relative to the document image on the display screen.

20. The information device according to claim 19, wherein the display attribute changing means determines a display color, a gray scale of the display color, and a font of at least one of the extracted character image and the display screen such that the extracted character image is highlighted.

21. The information device according to claim 20, further comprising range specifying means for specifying an extract range of an image as the extracted character image from the document image.

22. The information device according to claim 21, wherein the range specifying means specifies a predetermined range of a character image in the document image as the extract range.
